# EUROPÄISCHE PATENTSCHRIFT

(11) **EP 0 403 864 B1**
(45) Veröffentlichungstag und Bekanntmachung des Hinweises auf die Patenterteilung: **21.02.1996**
(21) Anmeldenummer: 90110483.6
(22) Anmeldetag: 01.06.1990
(51) Int. Cl.: H04Q 1/14

(54) **Verteilerleiste für Telekommunikationsanlagen mit Trennkontakten**
Distribution block for telecommunication exchanges with break contacts
Bloc de répartition pour centraux de télécommunication avec contacts de coupure

(30) Priorität: 15.06.1989 DE 3919623
(43) Veröffentlichungstag der Anmeldung: 27.12.1990
(73) Patentinhaber: SIEMENS AKTIENGESELLSCHAFT, D-80333 München (DE)
(72) Erfinder: Scholtholt, Hans, Ing., D-8044 Lohhof (DE); Steiner, Ewald, Ing., D-8137 Berg 3 (DE)

(56) Entgegenhaltungen:
- EP-A- 0 041 596
- FR-A- 2 519 222
- FR-A- 2 526 592

## Beschreibung

Die Erfindung bezieht sich auf eine Verteilerleiste für Telekommunikations-, insbesondere Fernsprechanlagen, mit reihenförmig angeordneten Trennkontakten. Eine derartige Verteilerleiste ist zum Beispiel durch die EP 0 180 000 bekannt geworden. Danach wird ein Trennkontakt jeweils von Kontaktpolen zweier Kontaktstücke gebildet, deren freie Enden auf der Bedienungsseite aus der Verteilerleiste herausragen und dort als Anschlußelemente für ankommende und abgehende Leitungen ausgebildet sind. Die Kontaktteile sind im inneren der Verteilerleiste als Kontaktfedern ausgebildet, die spitzwinklig in sich zurückgebogen sind und an ihrem Federende die Kontaktpole aufweisen. Diese sind im Bereich der Rückseite der Verteilerleiste angeordnet. Zwischen die Kontaktpole ist von der Bedienungsseite her ein Trennstecker einschiebbar.

Durch die Anordnung der Kontaktpole nahe der Leistenrückseite weisen die Kontaktfedern in die Einsteckrichtung der Trennstecker und bilden eine günstige Auflaufschräge für diese. Die Kontaktteile sind mehrfach in sich gebogen und spiegelbildlich zueinander angeordnet, so daß sich eine große Gesamtbreite der Verteilerleiste ergibt.

Die von den Teilnehmern ankommenden Leitungen sind von der Stirnseite der Verteilerleiste her an eine Doppelreihe von Anschlußelementen angeschlossen. Die zur Vermittlungseinrichtung führenden abgehenden Leitungen sind von der Rückseite her an die gegenüberliegende Doppelreihe von Anschlußelementen herangeführt.

Ferner ist es durch die US 4 262 173 bekannt, die Anschlußelemente für die häufig zu ändernden ankommenden Leitungen auf der Bedienungsseite anzuordnen. Die Anschlußelemente für die selten zu ändernden abgehenden Leitungen liegen auf der der Bedienungsseite abgewandten Rückseite der Verteilerleiste. Von den beiden Anschlußelementen aus ragen Kontaktteile geradlinig in das Innere der Verteilerleiste. Eines der Kontaktteile ist als Kontaktfeder ausgebildet, die das Gegenkontaktteil überlappt und zusammen mit diesem eine zentrale Kontaktstelle bildet, die durch einen bedienungsseitig eingeschobenen Trennstecker aufgetrennt werden kann.

Ferner ist durch die FR-A-25 19 222 eine Verteilerleiste mit reihenförmig angeordneten Trennkontakten bekannt geworden, die jeweils von Kontaktpolen zweier Kontaktteile gebildet sind, deren freie Enden Anschlußelemente für ankommende und abgehende Leitungen aufweisen. Eines der Kontaktteile ist als Kontaktfeder ausgebildet, die an ihrem Federende den Kontaktpol aufweist. Das andere Kontaktteil ragt im wesentlichen in gestreckter Linie von der Rückseite her in das Gehäuse der Verteilerleiste hinein. Das federnde Kontaktteil ist von der Bedienungsseite her in das Gehäuse hineingeführt und dort zur Bedienungsseite hin in sich zurückgebogen, wo es den Kontaktpol trägt.

Der Erfindung liegt die Aufgabe zugrunde, den Herstellungsaufwand der Verteilerleiste zu verringern und deren Abmessungen zu verkleinern.

Diese Aufgabe wird durch die Erfindung gemäß Anspruch 1 gelöst. Danach ist nun das Kontaktteil für die selten zu ändernden abgehenden Leitungen von der Rückseite her bis zur Bedienungsseite geführt und von dort zur Rückseite hin zurückgefaltet. Dadurch überlappen sich die beiden Kontaktteile auf ihrer gesamten Länge und sind von der Kontaktstelle aus zur Frontseite hin geführt. Das gefaltete Kontaktteil bildet eine sehr geringe Auflaufschräge für den Trennstecker, so daß dieser leicht eingeschoben werden kann. Da der zurückgebogene Schenkel in die Einsteckrichtung ragt, tragen die entstehenden Reibungskräfte dazu bei, daß die Kontaktstelle leichter geöffnet werden kann.

Die Abstützstellen für den Trennstecker liegen in der Nähe der Rückseite und der Frontseite. Dies ergibt eine so günstige Hebelwirkung für den Trennstecker, daß dieser relativ dünn ausgebildet werden kann.

Durch die relativ große Federlänge kann die Bauhöhe der Verteilerleiste erheblich verringert werden. Das Gehäuse der Verteilerleiste kann einstückig ausgebildet werden. Die offene Rückseite wird entweder durch eine angesetzte Leiterplatte oder durch einen einfachen Deckel verschlossen. Das gefaltete federnde Kontaktteil wird aufgrund seiner Eigenspannung im Gehäuse gehalten. Dadurch ist es möglich, beide Kontaktteile im selben Gehäuseteil zu halten. Dieses bleibt für unterschiedliche Anwendungsarten unverändert. Da der Deckel für die Funktion der Kontaktteile nur eine untergeordnete Bedeutung hat, kann dieser leicht verändert und unterschiedlichen Einbauund Anschlußverhältnissen angepaßt werden.

Vorteilhafte Weiterbildung der Erfindung sind in Ansprüchen 2 bis 8 gekennzeichnet:

Durch die Weiterbildung nach Anspruch 2 wird das Kontaktteil mit dem Kontaktpol in den Steckbereich des Trennsteckers hinein gebogen, so daß die auf den Stecker einwirkenden Seitkräfte ausgeglichen werden können.

Durch die Weiterbildung nach Anspruch 3 kann das geradlinige Kontaktteil in einfacher Weise auf der Bedienungsseite in das Gehäuse eingeschoben und darin fixiert werden.

Durch die Weiterbildung nach Anspruch 4 kann das abgewinkelte Kontaktteil zum Beispiel von der Rückseite her in das Gehäuse eingeschoben und darin fixiert werden. Der Verriegelungslappen braucht in sich nicht federnd ausgebildet zu sein.

Die Weiterbildung nach Anspruch 5 ermöglicht eine Entriegelung der Kontaktteile von der Frontseite her mittels eines Entriegelungssteckers.

Das einstückige Gehäuse nach Anspruch 6 läßt sich kostengünstig herstellen.

Die gemeinsame Bodenplatte nach Anspruch 7 ersetzt einzelne Bodenplatten nach dem Stand der Technik. Ein besonderer Vorteil besteht darin, daß die Bodenplatte eine leistenübergreifende Beschriftung tragen kann, die die Position der einzelnen Kontaktteile markiert.

Die Bodenplatte nach Anspruch 8 kann Teil einer elektrischen Funktionseinheit sein, an die die ankommenden Leitungen unmittelbar angeschlossen werden. Die Leiterplatte kann aber auch Teil eines gesonderten Verteilers sein.

Im folgenden wird die Erfindung anhand eines in der Zeichnung dargestellten Ausführungsbeispieles näher erläutert:
- Fig. 1 zeigt: einen Querschnitt durch eine Verteilerleiste mit Kontaktteilen entlang der Linie I-I in Figur 4.
- Fig. 2 und 3: zeigen Ansichten der Kontaktteile nach Fig. 1.
- Fig. 4 zeigt: eine verkleinerte Draufsicht auf die Verteilerleiste nach Fig. 1.

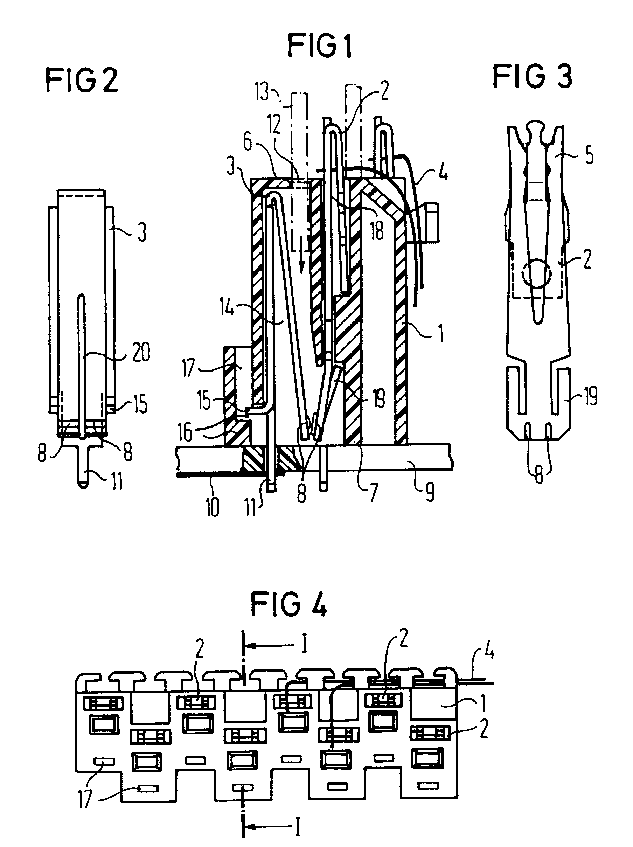

Nach Fig. 1 sind in ein Gehäuse 1 einer Verteilerleiste Kontaktteile 2, 3 eingesetzt. Die Verteilung der Kontaktteile 2, 3 in der Verteilerleiste ist aus Fig.4 ersichtlich. Danach sind die Kontaktteile 2, 3 in zwei verschiedenen Reihen versetzt zueinander angeordnet, wobei sich die Reihen in der Längsrichtung der Leiste erstrecken.

Von den Teilnehmern ankommenden Leitungen 4 sind an als Schneidklemmen ausgebildete Anschlußelemente 5 angeschlossen, die sich auf der Bedienungsseite 6 der Verteilerleiste befinden. Sie sind Teil der Kontaktteile 2, die sich im wesentlichen geradlinig zur Rückseite 7 der Verteilerleiste erstrecken. An diesem Ende sind sie mit Kontaktpolen 8 versehen.

Die Verteilerleiste ist mit ihrer Rückseite 7 auf eine gedruckte Leiterplatte 9 aufgesetzt, die abgehende Leitungen 10 in Form von gedruckten Leiterbahnen enthält. Diese enden in Kontaktstellen für stiftartige Anschlußelemente 11 der Kontaktteile 3. Die V-förmig gebogenen Kontaktteile 3 erstrecken sich von der Leiterplatte 9 aus bis in die Nähe der Bedienungsseite 6 und sind von dort im spitzen Winkel zur Rückseite 7 zurückgebogen. Dieser Schenkel wirkt als Blattfeder, die an dem freien Ende ebenfalls einen Kontaktpol 8 aufweist, der mit dem entsprechenden Gegenkontaktpol des anderen Kontaktteils 2 zusammentrifft.

Das Gehäuse 1 ist auf der Bedienungsseite mit Durchtrittsöffnungen 12 für strichpunktiert angedeutete Trennstecker 13 versehen. Diese werden in der angegebenen Pfeilrichtung in das Gehäuse 1 eingeschoben und treffen dabei auf den schräg stehenden Federschenkel des Kontaktelements 3. Dieser wird dabei vom Gegenkontakt weg zurückgedrückt, wodurch der Kontakt getrennt wird.

Die Kontaktteile 3 für die abgehenden Leitungen sind von der Rückseite 6 her in Aufnahmekammern 14 des Gehäuses 1 eingesetzt und darin mittels eines abgebogenen Verriegelungslappens 15 gehalten, der aufgrund der Eigenspannung des Kontaktteils in eine seitliche Vertiefung 16 des Gehäuses 1 eingreift. Dieses ist mit einer Entriegelungsöffnung 17 versehen, durch die der Verriegelungslappen 15 von der Bedienungsseite her für ein Entriegelungswerkzeug zugänglich ist.

Die Kontaktteile 2 für die ankommenden Leitungen 4 sind in Aufnahmekammern 18 des Gehäuses 1 von der Bedienungsseite 6 her eingesetzt. Am rückseitigen Ende weist das Kontaktteil einen federnd abgespreizten Rastlappen 19 auf, der einen Absatz des Gehäuses 1 hintergreift. Damit ist auch das Kontaktteil 2 sicher im Gehäuse 1 verankert.

In Fig. 2 ist das Kontaktteil 3 für die abgehenden Leitungen 10 in einer Seitenansicht zu sehen, wobei insbesondere die Verriegelungslappen 15 als seitlich herausgerissene Lappen erkennbar sind. Der federnde Schenkel weist einen mittleren Trennschlitz 20 auf, wodurch der Kontaktpol 8 als Doppelkontakt wirksam ist.

In Fig. 3 ist erkennbar, daß das Anschlußelement 5 als Doppelschneidklemme ausgebildet ist, die sich zum Anschluß von zwei abgehenden Leitungen 4 eignet. Diese Funktion ist insbesondere bei Änderungsarbeiten von Vorteil, bei denen die neuen Verbindungen bereits gelegt werden können, bevor die alten getrennt werden.

Das rückseitige Ende des Kontaktteils 2 ist ebenfalls mit 2 sich mit den Gegenpolen kreuzenden Kontaktpolen 8 versehen. Die Rastlappen 19 erstrecken sich seitlich von den Kontaktpolen 8 aus in Richtung der Bedienungsseite.

## Patentansprüche

1. Verteilerleiste für Telekommunikations-, insbesondere Fernsprechanlagen mit reihenförmig angeordneten Trennkontakten, wobei ein Trennkontakt jeweils von Kontaktpolen (8) zweier Kontaktteile (2, 3) gebildet ist, deren freie Enden Anschlußelemente (5, 11) für ankommende und abgehende Leitungen (4, 10) aufweisen, wobei zumindest eines der Kontaktteile (3) als Kontaktfeder ausgebildet ist, die an ihrem Federende den Kontaktpol (8) aufweist, wobei die Anschlußelemente (5) für die häufig zu ändernden ankommenden Leitungen (4) auf der Bedienungsseite (6) angeordnet sind, und wobei die Anschlußelemente für die selten zu ändernden abgehenden Leitungen (10) auf der Rückseite (7) der Verteilerleiste liegen, wobei eines der Kontaktteile (2) annähernd gestreckt ausgebildet ist und das andere Kontaktteil von einer ersten Seite zur gegenüberliegenden Seite geführt ist und von dort zur ersten Seite um sich zurückgebogen ist und dort den Kontaktpol (8) trägt,
**dadurch gekennzeichnet,**
daß das Kontaktteil (3) für die abgehenden Leitungen (10) von der Rückseite aus (7) in die Nähe der Bedienungsseite (6) geführt, von dort bis zur Rückseite (7) zurückgebogen ist und dort den Kontaktpol (8) trägt, und
daß das Kontaktteil (2) für die ankommenden Leitungen (4) in annähernd gestreckter Linie von der Bedienungsseite (6) zur Rückseite (7) verläuft,
daß das andere in sich geknickte Kontaktteil (3) in eine Aufnahmekammer (14) des Gehäuses (1) von der Rückseite (7) des Gehäuses (1) her eingesetzt ist und Rastmittel (z.B. 15) aufweist, die unter der Eigenspannung des Kontaktteils (3) mit entsprechenden Gegenrastmitteln (z.B. 16) des Gehäuses (1) zusammenwirken.

2. Verteilerleiste nach Anspruch 1,
**dadurch gekennzeichnet,**
daß das sich im wesentlichen geradlinig erstreckende Kontaktteil (2) für die ankommenden Leitungen (4) eine andere in die Aufnahmekammer (18) eines Gehäuses (1) der Verteilerleiste eingesetzt ist und im Bereich seines rückseitigen Endes eine schwache Abbiegung zum anderen Kontaktteil (3) hin aufweist.

3. Verteilerleiste nach Anspruch 2,
**dadurch gekennzeichnet,**
daß das geradlinige Kontaktteil (2) an seinem rückseitigen Ende zumindest einen Rastlappen (19) aufweist, der sich an einem Absatz des Gehäuses (1) abstützt.

4. Verteilerleiste nach einem der Ansprüche 1, 2, oder 3,
**dadurch gekennzeichnet,**
daß die Rastmittel als aus dem Kontaktteil (3) herausgerissene Verriegelungslappen (15) ausgebildet sind und daß die Gegenrastmittel die Form einer Vertiefung (16) im Gehäuse (1) aufweisen.

5. Verteilerleiste nach Anspruch 4,
**dadurch gekennzeichnet,**
daß die Vertiefung (15) von der Bedienungsseite (6) her zugänglich ist.

6. Verteilerleiste nach einem der vorhergehenden Ansprüche,
**dadurch gekennzeichnet,**
daß das Gehäuse (1) einstückig ausgebildet und auf eine Bodenplatte aufsetzbar ist, die mit Durchbrüchen für die abgehenden Anschlußelemente (11) versehen ist.

7. Verteilerleiste nach Anspruch 6,
**dadurch gekennzeichnet,**
daß mehrere Verteilerleisten auf eine gemeinsame Bodenplatte aufsetzbar sind.

8. Verteilerleiste nach Anspruch 6 oder 7,
**dadurch gekennzeichnet,**
daß die Bodenplatte als gedruckte Leiterplatte (9) ausgebildet ist und daß die Anschlußelemente (11) für die abgehenden Leitungen (10) in durchplatierte Bohrungen der Leiterplatte (9) einsetzbar sind.

## Claims

1. Distribution strip for telecommunication systems, especially telephone systems, having break contacts arranged in rows, a break contact being formed in each case by contact poles (8) of two contact parts (2, 3) whose free ends have connecting elements (5, 11) for incoming and outgoing lines (4, 10), at least one of the contact parts (3) being designed as a contact spring which has the contact pole (8) at its spring end, the connecting elements (5) for the incoming lines, which are to be changed frequently, being arranged on the service side (6), and the connecting elements for the outgoing lines (10), which are to be changed infrequently, being located on the rear (7) of the distribution strip, one of the contact parts (2) being designed approximately straight and the other contact part being led from a first side to the opposite side and being bent back around itself from there towards the first side and carrying the contact pole (8) there, characterized in that the contact part (3) for the outgoing lines (10) is led from the rear (7) into the vicinity of the service side (6), is bent back from there towards the rear (7) and carries the contact pole (8) there, and in that the contact part (2) for the incoming lines (4) runs in an approximately straight line from the service side (6) to the rear (7), in that the other contact part (3), bent within itself, is inserted into a reception chamber (14) of the housing (1) from the rear (7) of the housing (1) and has locking means (e.g. 15) which, under the inherent tension of the contact part (3), cooperate with corresponding mating locking means (e.g. 16) of the housing (1).

2. Distribution strip according to Claim 1, characterized in that the contact part (2) for the incoming lines (4), extending essentially in a straight line, is inserted into another reception chamber (18) of a housing (1) of the distribution strip and, in the region of its rear end, has a slight bend towards the other contact part (3).

3. Distribution strip according to Claim 2, characterized in that the straight contact part (2) has, on its rear end, at least one locking tab (19) which is supported on a ledge of the housing (1).

4. Distribution strip according to one of Claims 1, 2 or 3, characterized in that the locking means are designed as locking tabs (15) broken out from the contact part (3), and in that the mating locking means have the form of a depression (16) in the housing (1).

5. Distribution strip according to Claim 4, characterized in that the depression (16) is accessible from the service side (6).

6. Distribution strip according to one of the preceding claims, characterized in that the housing (1) is designed in one piece and can be placed on a base plate which is provided with apertures for the outgoing connecting elements (11).

7. Distribution strip according to Claim 6, characterized in that a plurality of distribution strips can be placed on a common base plate.

8. Distribution strip according to Claim 6 or 7, characterized in that the base plate is designed as a printed circuit board (9), and in that the connecting elements (11) for the outgoing lines (10) can be inserted into plated-through holes in the circuit board (9).

## Revendications

1. Barrette de distribution destinée à des installations de télécommunications, notamment à des installations téléphoniques, comportant des contacts de coupure disposés suivant une rangée, et dans laquelle un contact de coupure est formé de pôles de contact (8) de deux pièces de contact (2,3), dont les extrémités libres comportent des éléments de raccordement (5,11) destinés à des conducteurs d'arrivée et de départ (4,10), au moins l'une des pièces de contact (3) est sous la forme d'un ressort de contact, qui a à l'extrémité le pôle de contact (8), les éléments de raccordement (5) destinés aux conducteurs d'arrivée (4), qui doivent être fréquemment modifiés, sont disposés sur le côté de commande (6), et les éléments de raccordement destinés aux conducteurs de départ (10), qui doivent être modifiés rarement, sont sur le côté arrière (7) de la barrette de distribution, l'une des pièces de contact (2) ayant une forme sensiblement oblongue et l'autre pièce de contact s'étend d'un premier côté au côté opposé et est, à partir de cet endroit, recourbée sur elle-même vers le premier côté et porte en cet endroit le pôle de contact (8), caractérisée par le fait
que la pièce de contact (3) destinée aux conducteurs de départ (10) s'étend du côté arrière (7) jusqu'à proximité du côté de commande (6), est recourbée à partir de cet endroit vers le côté arrière (7) et porte en ce dernier endroit le pôle de contact (8),
la pièce de contact (2) destinée aux lignes d'arrivée (4) s'étend approximativement suivant une ligne droite du côté de commande (6) vers le côté arrière (7), et
l'autre pièce de contact (3) coudée sur elle-même est insérée dans une chambre de réception (14) du boîtier (1) à partir du côté arrière (7) de ce dernier et comporte des moyens d'encliquetage (par exemple 15), qui coopèrent, sous la contrainte propre de la pièce de contact (3), avec des moyens d'encliquetage antagonistes correspondants (par exemple 16) du boîtier (1).

2. Barrette de distribution suivant la revendication 1, caractérisée par le fait que la pièce de contact (2), qui s'étend sensiblement d'une manière rectiligne et qui est destinée aux conducteurs d'arrivée (4) est insérée dans une autre chambre de réception (18), d'un boîtier (1), de la barrette de distribution et comporte, à son extrémité arrière, un léger coude en direction de l'autre pièce de contact (3).

3. Barrette de distribution suivant la revendication 2, caractérisée par le fait que la pièce de contact rectiligne (2) a, à son extrémité arrière, au moins une languette d'encliquetage (19), qui prend appui sur une partie étagée du boîtier (1).

4. Barrette de distribution suivant l'une des revendications 1, 2 ou 3, caractérisée en ce que les moyens d'encliquetage sont sous la forme de languettes de verrouillage (15) qui sont formées par arrachement à partir de la pièce de contact (3) et que les moyens d'encliquetage antagonistes ont la forme d'un renfoncement (16) ménagé dans le boîtier (1).

5. Barrette de distribution suivant la revendication 4, caractérisée par le fait que le renfoncement (4) est accessible du côté de commande (6).

6. Barrette de distribution suivant l'une des revendications précédentes, caractérisée en ce que le boîtier (1) est d'un seul tenant et peut être monté sur une plaque de fond, qui est pourvue de passages pour les éléments de raccordement de départ (11).

7. Barrette de distribution suivant la revendication 6, caractérisée par le fait que plusieurs barrettes de distribution peuvent être montées sur une plaque de fond commune.

8. Barrette de distribution suivant la revendication 6 ou 7, caractérisée par le fait que la plaque de fond est sous la forme d'une plaquette à circuits imprimés (9) et que les éléments de raccordement (11) destinés aux conducteurs de départ (10) peuvent être insérés dans des trous métallisés de la plaquette à circuits imprimés (9).
